# EUROPEAN PATENT APPLICATION

(11) **EP 4 671 690 A1**
(43) Date of publication of application: **31.12.2025**
(21) Application number: 25202673.7
(22) Date of filing: 17.09.2025
(51) Int. Cl.: G01C 21/34, B60W 30/095

(54) **TRAJECTORY PREDICTION METHOD, METHOD FOR TRAINING TRAJECTORY PREDICTION MODEL, MEDIUM, AND DEVICE**

(30) Priority: 30.09.2024 CN 202411391006
(71) Applicant: Apollo Intelligent Driving Technology (Beijing) Co., Ltd., Haidian District Beijing 100085 (CN)
(72) Inventor: ZHOU, Yao, Beijing 100085 (CN); WANG, Fan, Beijing 100085 (CN); HUANG, Jizhou, Beijing 100085 (CN)
(74) Representative: Laqua, Bernd Christian Kurt

(57) **Abstract**

The present disclosure provides a trajectory prediction method, a method for training a trajectory prediction model, a medium, and a device, and relates to the technical field of computers, and in particular to the technical fields of autonomous driving and artificial intelligence. An implementation solution includes: obtaining first information and a plurality of waypoint sequences of a target vehicle, wherein the first information comprises navigation information of the target vehicle and perception information of surroundings of the target vehicle, and wherein each waypoint sequence of the plurality of waypoint sequences comprises a plurality of waypoints within a future route segment; performing, for each waypoint sequence of the plurality of waypoint sequences, trajectory prediction based on the first information under the guidance of the waypoint sequence to obtain a predicted trajectory corresponding to the waypoint sequence and a score for the predicted trajectory; and determining, based on respective scores for a plurality of predicted trajectories corresponding to the plurality of waypoint sequences, a target predicted trajectory among the plurality of predicted trajectories.

## Description

### TECHNICAL FIELD

The present disclosure relates to the technical field of computers, in particular to the technical fields of autonomous driving and artificial intelligence, and specifically to a trajectory prediction method implemented using a trajectory prediction model, a method for training a trajectory prediction model, an apparatus, an electronic device, a computer-readable storage medium, a computer program product, and an autonomous vehicle.

### BACKGROUND

Artificial intelligence is a subject on making a computer simulate some thinking processes and intelligent behaviors (such as learning, reasoning, thinking, and planning) of a human, and involves both hardware-level technologies and software-level technologies. Artificial intelligence hardware technologies generally include the technologies such as sensors, dedicated artificial intelligence chips, cloud computing, distributed storage, and big data processing. Artificial intelligence software technologies mainly include the following several general directions: computer vision technologies, speech recognition technologies, natural language processing technologies, machine learning/deep learning, big data processing technologies, and knowledge graph technologies.

Autonomous driving technologies integrate many aspects of technologies such as identification, decision-making, positioning, communication security, and human-computer interaction. Artificial intelligence learning can assist in generating autonomous driving strategies.

Methods described in this section are not necessarily methods that have been previously conceived or employed. It should not be assumed that any of the methods described in this section is considered to be a conventional technology just because they are included in this section, unless otherwise indicated expressly. Similarly, the problem mentioned in this section should not be considered to be universally recognized in any conventional technology, unless otherwise indicated expressly.

### SUMMARY

The present disclosure provides a trajectory prediction method implemented using a trajectory prediction model, a method for training a trajectory prediction model, an apparatus, an electronic device, a computer-readable storage medium, a computer program product, and an autonomous vehicle.

According to an aspect of the present disclosure, a trajectory prediction method is provided. The method includes: obtaining first information and a plurality of waypoint sequences of a target vehicle, wherein the first information comprises navigation information of the target vehicle and perception information of surroundings of the target vehicle, and wherein each waypoint sequence of the plurality of waypoint sequences comprises a plurality of waypoints within a future route segment; performing, for each waypoint sequence of the plurality of waypoint sequences, trajectory prediction based on the first information under the guidance of the waypoint sequence to obtain a predicted trajectory corresponding to the waypoint sequence and a score for the predicted trajectory; and determining, based on respective scores for a plurality of predicted trajectories corresponding to the plurality of waypoint sequences, a target predicted trajectory among the plurality of predicted trajectories.

According to another aspect of the present disclosure, a method for training a trajectory prediction model is provided. The method includes: obtaining sample data, wherein the sample data comprises first information and a plurality of waypoint sequences of a sample vehicle, and wherein the first information comprises sample navigation information of the sample vehicle and sample perception information of surroundings of the sample vehicle, wherein each waypoint sequence of the plurality of waypoint sequences comprises a plurality of waypoints within a future route segment and is labeled with a score label, and wherein the plurality of waypoint sequences comprise one positive sample sequence; inputting, for each waypoint sequence in the sample data, the waypoint sequence and the first information into the trajectory prediction model, to use the trajectory prediction model to perform trajectory prediction based on the first information under the guidance of the waypoint sequence, and output a predicted trajectory corresponding to the waypoint sequence and a score for the predicted trajectory; and adjusting at least one parameter of the trajectory prediction model based on the positive sample sequence and a predicted trajectory corresponding to the positive sample sequence, and a score and a score label that are corresponding to each waypoint sequence in the sample data.

According to another aspect of the present disclosure, a trajectory prediction apparatus is provided. The apparatus includes: a first obtaining unit configured to obtain first information and a plurality of waypoint sequences of a target vehicle, wherein the first information comprises navigation information of the target vehicle and perception information of surroundings of the target vehicle, and wherein each waypoint sequence of the plurality of waypoint sequences comprises a plurality of waypoints within a future route segment; a second obtaining unit configured to perform, for each waypoint sequence of the plurality of waypoint sequences, trajectory prediction based on the first information under the guidance of the waypoint sequence to obtain a predicted trajectory corresponding to the waypoint sequence and a score for the predicted trajectory; and a first determining unit configured to determine, based on respective scores for a plurality of predicted trajectories corresponding to the plurality of waypoint sequences, a target predicted trajectory among the plurality of predicted trajectories.

According to another aspect of the present disclosure, an apparatus for training a trajectory prediction model is provided. The apparatus includes: a first obtaining unit configured to obtain sample data, wherein the sample data comprises first information and a plurality of waypoint sequences of a sample vehicle, and wherein the first information comprises sample navigation information of the sample vehicle and sample perception information of surroundings of the sample vehicle, wherein each waypoint sequence of the plurality of waypoint sequences comprises a plurality of waypoints within a future route segment and is labeled with a score label, and wherein the plurality of waypoint sequences comprise one positive sample sequence; a first input unit configured to input, for each waypoint sequence in the sample data, the waypoint sequence and the first information into the trajectory prediction model, to use the trajectory prediction model to perform trajectory prediction based on the first information under the guidance of the waypoint sequence, and output a predicted trajectory corresponding to the waypoint sequence and a score for the predicted trajectory; and an adjustment unit configured to adjust at least one parameter of the trajectory prediction model based on the positive sample sequence and a predicted trajectory corresponding to the positive sample sequence, and a score and a score label that are corresponding to each waypoint sequence in the sample data.

According to another aspect of the present disclosure, an electronic device is provided. The electronic device includes: at least one processor; and a memory communicatively connected to the at least one processor, where the memory stores instructions executable by the at least one processor, and when executed by the at least one processor, the instructions cause the at least one processor to perform the foregoing trajectory prediction method implemented using a trajectory prediction model or the foregoing method for training a trajectory prediction model.

According to another aspect of the present disclosure, a non-transitory computer-readable storage medium storing computer instructions is provided, where the computer instructions are used to cause a computer to perform the foregoing trajectory prediction method implemented using a trajectory prediction model or the foregoing method for training a trajectory prediction model.

According to another aspect of the present disclosure, a computer program product is provided, including a computer program, where when the computer program is executed by a processor, the foregoing trajectory prediction method implemented using a trajectory prediction model or the foregoing method for training a trajectory prediction model are implemented.

According to another aspect of the present disclosure, an autonomous vehicle is provided. The autonomous vehicle includes the foregoing electronic device.

It should be understood that the content described in this section is not intended to identify critical or important features of the embodiments of the present disclosure, and is also not intended to limit the scope of the present disclosure. Other features of the present disclosure will be readily understood with reference to the following description.

### BRIEF DESCRIPTION OF THE DRAWINGS

The accompanying drawings show exemplary embodiments and form a part of the specification, and are used to explain exemplary implementations of the embodiments together with the written description of the specification. The embodiments shown are merely for illustrative purposes and do not limit the scope of the claims. Throughout the accompanying drawings, the same reference numerals denote similar but not necessarily same elements.
FIG. 1 is a schematic diagram of an exemplary system in which various methods described herein can be implemented according to an example of the present disclosure;
FIG. 2 is a flowchart of a trajectory prediction method implemented using a trajectory prediction model according to an example of the present disclosure;
FIG. 3 is a flowchart of obtaining a plurality of waypoint sequences according to an example of the present disclosure;
FIG. 4 is a schematic diagram showing waypoint sequences according to an example of the present disclosure;
FIG. 5 is a schematic structural diagram of a trajectory prediction model according to an example of the present disclosure;
FIG. 6 is a schematic structural diagram of a first prediction network according to an example of the present disclosure;
FIG. 7 is a flowchart of a method for training a trajectory prediction model according to an example of the present disclosure;
FIG. 8 is a schematic diagram of a method for training a first prediction network according to an example of the present disclosure;
FIG. 9 is a structural block diagram of a trajectory prediction apparatus implemented using a trajectory prediction model according to an example of the present disclosure;
FIG. 10 is a structural block diagram of an apparatus for training a trajectory prediction model according to an example of the present disclosure; and
FIG. 11 is a structural block diagram of an exemplary electronic device that can be used to implement an example of the present disclosure.

### DETAILED DESCRIPTION

Embodiments of the present disclosure are described below in conjunction with the accompanying drawings, where various details of the embodiments of the present disclosure are included to facilitate understanding, and should only be considered as exemplary. Therefore, those of ordinary skill in the art should be aware that various changes and modifications can be made to the embodiments described here, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one element from another. In some examples, a first element and a second element may refer to a same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of the listed terms.

In related technologies, there are two main end-to-end trajectory prediction solutions:
First, based on perception information and navigation information of a vehicle, an entire traveling trajectory of the vehicle for a future road segment is directly predicted. Since a potentially feasible vehicle traveling trajectory is multi-modal and a labeled trajectory is only one of the solutions, using this solution may result in insufficient lateral avoidance, deceleration, etc. for the entire traveling trajectory. For example, in a lane change and overtaking scenario, if the solution above is used for trajectory prediction, an obtained trajectory may neither indicate to change lanes to the left nor indicate to change lanes to the right, but instead a trajectory similar to going straight is output, causing a failure in lane change.
Second, the future road segment is divided into sub-segments, and trajectory prediction is performed for each sub-segment based on the perception information and navigation information of the vehicle. This method can enable the vehicle to select an appropriate lane in each sub-segment, but due to discontinuity in prediction, an output trajectory is likely to constantly jump across multiple lanes, causing the vehicle to change lanes back and forth and preventing normal traveling.

An embodiment of the present disclosure provides a trajectory prediction method. A plurality of possible waypoint sequences of a target vehicle on a future route segment are obtained, and under the guidance of the waypoint sequences, prediction is performed to obtain a plurality of predicted trajectories corresponding to the plurality of waypoint sequences and scores for the predicted trajectories, and then a target predicted trajectory is determined based on the scores for the predicted trajectories. In this way, it is possible to avoid a problem that jumps occur in the predicted trajectory in trajectory prediction for sub-segments, and to avoid a problem of insufficient lateral avoidance, deceleration, etc. occurring in the entire predicted trajectory, thereby improving reasonableness of trajectory prediction.

The embodiments of the present disclosure will be described below in detail with reference to the accompanying drawings.

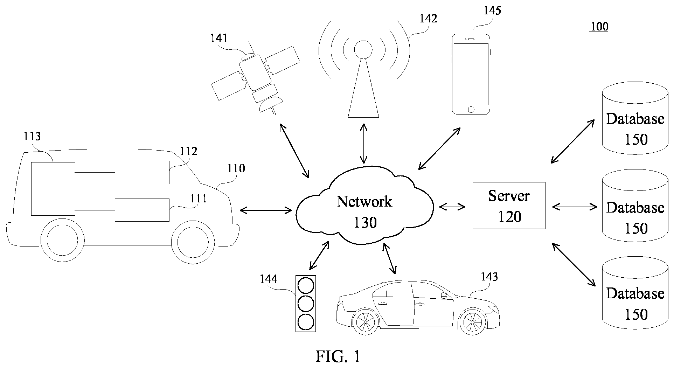

FIG. 1 is a schematic diagram of an exemplary system 100 in which various methods and apparatuses described herein can be implemented according to an embodiment of the present disclosure. Referring to FIG. 1, the system 100 includes a motor vehicle 110, a server 120, and one or more communication networks 130 that couple the motor vehicle 110 to the server 120.

In this embodiment of the present disclosure, the motor vehicle 110 may include a computing device according to embodiments of the present disclosure and/or may be configured to perform the method according to embodiments of the present disclosure.

The server 120 can run one or more services or software applications that enable a trajectory prediction method to be implemented. In some examples of the present application, the server 120 may further provide other services or software applications that may include a non-virtual environment and a virtual environment. In the configuration shown in FIG. 1, the server 120 may include one or more components that implement functions performed by the server 120. These components may include software components, hardware components, or a combination thereof that can be executed by one or more processors. A user of the motor vehicle 110 may sequentially use one or more client applications to interact with the server 120, thereby utilizing the services provided by these components. It should be understood that various different system configurations are possible, and may be different from that of the system 100. Therefore, FIG. 1 is an example of the system for implementing various methods described herein, and is not intended to be limiting.

The server 120 may include one or more general-purpose computers, a dedicated server computer (for example, a personal computer (PC) server, a UNIX server, or a terminal server), a blade server, a mainframe computer, a server cluster, or any other suitable arrangement and/or combination. The server 120 may include one or more virtual machines running a virtual operating system, or other computing architectures related to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any one of the above operating systems and any commercially available server operating system. The server 120 can also run any one of various additional server applications and/or middle-tier applications, including an HTTP server, an FTP server, a CGI server, a JAVA server, a database server, etc.

In some implementations, the server 120 may include one or more applications to analyze and merge data feeds and/or event updates received from the motor vehicle 110. The server 120 may further include one or more applications to display the data feeds and/or real-time events via one or more display devices of the motor vehicle 110.

The network 130 may be any type of network well known to those skilled in the art, and may use any one of a plurality of available protocols (including but not limited to TCP/IP, SNA, IPX, etc.) to support data communication. As a mere example, the one or more networks 110 may be a satellite communication network, a local area network (LAN), an Ethernet-based network, a token ring, a wide area network (WAN), the Internet, a virtual network, a virtual private network (VPN), an intranet, an extranet, a blockchain network, a public switched telephone network (PSTN), an infrared network, a wireless network (such as Bluetooth or Wi-Fi), and/or any combination of these and other networks.

The system 100 may further include one or more databases 150. In some examples of the present application, these databases can be configured to store data and other information. For example, one or more of the databases 150 can be configured to store information such as an audio file and a video file. The data repository 150 may reside at various locations. For example, a data repository used by the server 120 may be locally in the server 120, or may be remote from the server 120 and may communicate with the server 120 via a network-based or dedicated connection. The data repository 150 may be of different types. In some examples of the present application, the data repository used by the server 120 may be a database, such as a relational database. One or more of these databases can store, update, and retrieve data from or to the database, in response to a command.

In some examples of the present application, one or more of the databases 150 may also be used by an application to store application data. The database used by the application may be of different types, for example, may be a key-value repository, an object repository, or a regular repository backed by a file system.

The motor vehicle 110 may include a sensor 111 for sensing surroundings. The sensor 111 may include one or more of the following sensors: a visual camera, an infrared camera, an ultrasonic sensor, a millimeter-wave radar, and a lidar (LiDAR). Different sensors can provide different detection precision and ranges. Cameras can be mounted in the front of, at the back of, or at other locations of the vehicle. Visual cameras can capture the situation inside and outside the vehicle in real time and present it to the driver and/or passengers. In addition, by analyzing the image captured by the visual cameras, information such as indications of traffic lights, conditions of crossroads, and operating conditions of other vehicles can be obtained. Infrared cameras can capture objects in night vision. Ultrasonic sensors can be mounted around the vehicle to measure the distances of objects outside the vehicle from the vehicle using characteristics such as the strong ultrasonic directivity. Millimeter-wave radars can be mounted in the front of, at the back of, or at other locations of the vehicle to measure the distances of objects outside the vehicle from the vehicle using the characteristics of electromagnetic waves. Lidars can be mounted in the front of, at the back of, or at other locations of the vehicle to detect edge and shape information of objects, so as to perform object recognition and tracking. Due to the Doppler effect, the radar apparatuses can also measure the velocity changes of vehicles and moving objects.

The motor vehicle 110 may further include a communication apparatus 112. The communication apparatus 112 may include a satellite positioning module that can receive satellite positioning signals (for example, BeiDou, GPS, GLONASS, and GALILEO) from a satellite 141 and generate coordinates based on the signals. The communication apparatus 112 may further include a module for communicating with a mobile communication base station 142. The mobile communication network can implement any suitable communication technology, such as GSM/GPRS, CDMA, LTE, and other current or developing wireless communication technologies (such as 5G technology). The communication apparatus 112 may further have an Internet of Vehicles or vehicle-to-everything (V2X) module, which is configured to implement communication between the vehicle and the outside world, for example, vehicle-to-vehicle (V2V) communication with other vehicles 143 and vehicle-to-infrastructure (V2I) communication with infrastructures 144. In addition, the communication apparatus 112 may further have a module configured to communicate with a user terminal 145 (including but not limited to a smartphone, a tablet computer, or a wearable apparatus such as a watch) by using a wireless local area network or Bluetooth of the IEEE 802.11 standards. With the communication apparatus 112, the motor vehicle 110 may further access the server 120 via the network 130.

The motor vehicle 110 may further include a control apparatus 113. The control apparatus 113 may include a processor that communicates with various types of computer-readable storage apparatuses or media, such as a central processing unit (CPU) or a graphics processing unit (GPU), or other dedicated processors. The control apparatus 113 may include an autonomous driving system for automatically controlling various actuators in the vehicle. The autonomous driving system is configured to control a powertrain, a steering system, a braking system, and the like (not shown) of the motor vehicle 110 via a plurality of actuators in response to inputs from a plurality of sensors 111 or other input devices to control acceleration, steering, and braking, respectively, with no human intervention or limited human intervention. Part of the processing functions of the control apparatus 113 can be implemented by cloud computing. For example, a vehicle-mounted processor may be used to perform some processing, while cloud computing resources may be used to perform other processing. The control apparatus 113 may be configured to perform the method according to the present disclosure. In addition, the control apparatus 113 may be implemented as an example of a computing device of the motor vehicle (client) according to the present disclosure.

The system 100 of FIG. 1 may be configured and operated in various manners, so that the various methods and apparatuses described according to the present disclosure can be applied.

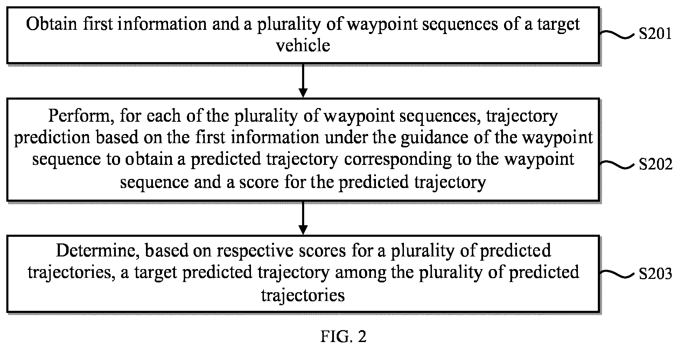

In some examples of the present application, as shown in FIG. 2, a trajectory prediction method is provided. The method includes the following steps: Step S201: Obtain first information and a plurality of waypoint sequences of a target vehicle, wherein the first information comprises navigation information of the target vehicle and perception information of surroundings of the target vehicle, and wherein each waypoint sequence of the plurality of waypoint sequences comprises a plurality of waypoints within a future route segment. Step S202: Perform, for each of the plurality of waypoint sequences, trajectory prediction based on the first information under the guidance of the waypoint sequence to obtain a predicted trajectory corresponding to the waypoint sequence and a score for the predicted trajectory. Step S203: Determine, based on respective scores for a plurality of predicted trajectories corresponding to the plurality of waypoint sequences, a target predicted trajectory among the plurality of predicted trajectories.

Therefore, a plurality of possible waypoint sequences of the target vehicle on the future route segment are obtained, and under the guidance of the waypoint sequences, prediction is performed to obtain the plurality of predicted trajectories corresponding to the plurality of waypoint sequences and the scores for the predicted trajectories, and then the target predicted trajectory is determined based on the scores for the predicted trajectories. In this way, it is possible to avoid a problem that jumps occur in the predicted trajectory in trajectory prediction for sub-segments, and to avoid a problem of insufficient lateral avoidance, deceleration, etc. occurring in an entire predicted trajectory, thereby improving reasonableness of trajectory prediction.

In some examples of the present application, the first information of the current target vehicle may be obtained first. The first information may include the navigation information of the target vehicle and the perception information of the surroundings of the target vehicle.

In some examples of the present application, the navigation information of the target vehicle may include vectorized navigation information and vectorized map information, and the vectorized navigation information and the vectorized map information may be obtained through vectorization operations on one or more of lane-level or road-level navigation information and coarse positioning information.

In some examples of the present application, the perception information of the surroundings of the target vehicle may include perception information of one or more video cameras, perception information of one or more lidars, and perception information of one or more millimeter-wave radars. It can be understood that the perception information of the surroundings of the target vehicle is not limited to the above form. For example, it may include only perception information of a plurality of video cameras, but not perception information of one or more lidars and perception information of one or more millimeter-wave radars. Perception information obtained through a video camera may be in the form of pictures or videos, and perception information obtained through a lidar may be in the form of a radar point cloud (such as a three-dimensional point cloud).

In some examples of the present application, the perception information may further include current perception information of the surroundings of the target vehicle during traveling of the vehicle and historical perception information corresponding to a plurality of historical moments.

In some examples of the present application, the perception information may alternatively be information about types and current statuses of a plurality of road elements and obstacles in the surroundings of the target vehicle that are detected by a perception and detection module on the basis of original sensor data. For example, the information may include a size and a location of an obstacle, a type of the vehicle, a current status of the vehicle (for example, long-tail information such as whether the turn signal is turned on, or whether the high beam is turned on), a location and a length of a lane line, and the like. It will be understood that the classification for the obstacle may be one or more of a plurality of predefined classes.

In some examples of the present application, the first information may further include at least one of map information and current motion state information of the target vehicle. Thereby, by providing richer information as an input for prediction, performance of trajectory prediction can be further improved.

In some examples of the present application, navigation maps may include a standard definition map (SD Map), a lane definition map (LD Map), and a high-definition map (HD Map). The standard definition map is mainly composed of granular road topology information, has a low navigation and positioning precision (for example, the precision is about 15 meters), and is mainly used to help drivers navigate, which cannot meet the needs of autonomous driving. In contrast, the lane definition map and the high-definition map may be used for autonomous driving. Lane-level topology information is introduced into the lane definition map, which has a higher precision than that of the standard definition map. The precision is generally at a sub-meter level. The lane definition map may include road information (such as lane lines) and lane-related ancillary facility information (such as traffic lights, street signs, and parking spots), and may be used to assist in autonomous driving. Compared with the lane definition map, the high-definition map has a higher map data precision (the precision reaches a centimeter level), richer map data types, and a higher map update frequency, and may be used for autonomous driving.

In some examples of the present application, the current motion state information of the target vehicle may include information such as a current location, speed, acceleration, and direction of travel of the target vehicle.

It can be understood that the first information may be determined as needed, which is not limited here.

In some examples of the present application, the plurality of waypoint sequences may include a plurality of waypoints that the target vehicle may pass through on a future traveling segment. In some examples of the present application, waypoints on the future traveling segment may be obtained through random sampling or sampling at a preset interval on the future traveling segment.

In some examples of the present application, performing, for each of the plurality of waypoint sequences, trajectory prediction based on the first information under the guidance of the waypoint sequence to obtain the predicted trajectory corresponding to the waypoint sequence and the score for the predicted trajectory may be inputting the waypoint sequence and the first information into a trajectory prediction model together, and the trajectory prediction model performing trajectory prediction and trajectory score prediction based on the first information under the guidance of the waypoint sequence, to output the predicted trajectory corresponding to the waypoint sequence and the score for the predicted trajectory.

In some examples of the present application, for example, the trajectory prediction model may be constructed using any transformer network structure. It can be understood that those skilled in the related art can also determine a network structure of the trajectory prediction model as needed, which is not limited here.

Subsequently, the target predicted trajectory may be determined among the plurality of prediction trajectories based on the respective scores for the predicted trajectories. In some examples of the present application, a predicted trajectory with the highest score may be determined as the target predicted trajectory. In some examples of the present application, a preset number of predicted trajectories with the highest scores may alternatively be obtained, and an optimal predicted trajectory may be determined through a further selection strategy. The selection strategy may be, for example, selecting a predicted trajectory for which a number of lane changes is not greater than a preset number or selecting the most appropriate predicted trajectory based on a road condition ahead, etc., which is not limited here.

Therefore, a plurality of possible waypoint sequences of the target vehicle on the future route segment are obtained, and under the guidance of the waypoint sequences, prediction is performed to obtain the plurality of predicted trajectories corresponding to the plurality of waypoint sequences and the scores for the predicted trajectories, and then the target predicted trajectory is determined based on the scores for the predicted trajectories. In this way, it is possible to avoid a problem that jumps occur in the predicted trajectory in trajectory prediction for sub-segments, and to avoid a problem of insufficient lateral avoidance, deceleration, etc. occurring in an entire predicted trajectory, thereby improving reasonableness of trajectory prediction.

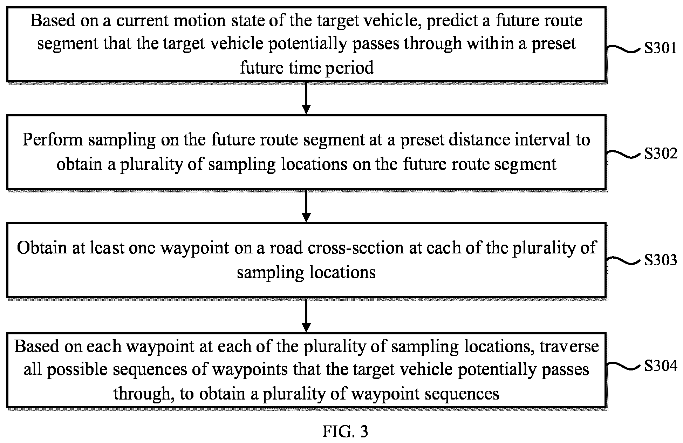

In some examples of the present application, as shown in FIG. 3, the plurality of waypoint sequences may alternatively be obtained based on the following operations: Step S301: Based on a current motion state of the target vehicle, predict the future route segment that the target vehicle potentially passes through within a preset future time period. Step S302: Perform sampling on the future route segment at a preset distance interval to obtain a plurality of sampling locations on the future route segment. Step S303: Obtain at least one waypoint on a road cross-section at each of the plurality of sampling locations. Step S304: Based on each waypoint at each of the plurality of sampling locations, traverse all possible sequences of waypoints that the target vehicle potentially passes through, to obtain the plurality of waypoint sequences.

In some examples of the present application, based on the current motion state of the target vehicle, a future route area that the target vehicle may pass through within the preset future time period may be determined on a current navigation route of the target vehicle. In some examples of the present application, the future route area may be calculated based on information such as a current speed and acceleration of the target vehicle.

In some examples of the present application, the preset future time period may be, for example, several seconds in the future. It can be understood that those skilled in the related art may set the preset future time period as needed, which is not limited here.

In some examples of the present application, after the future route area is determined, sampling may be performed on the future route area at a preset interval to obtain a plurality of sampling locations. For example, the future route area may be a road segment within a traveling distance of 100 meters later on a current navigation route. This road segment may be sampled every 30 meters, and thus three sampling locations may be obtained.

In some examples of the present application, sampling may also be performed in advance for the current navigation route at a preset distance interval (e.g., every 30 meters) to obtain a plurality of sampling locations on the navigation route segment; and after the future route area is determined based on the current motion state of the vehicle, a plurality of sampling locations contained in the future route area may be determined from the area.

On the basis of the above, at least one waypoint on a road cross-section at each sampling location may be obtained through sampling. The above-mentioned sampling may be random sampling or sampling at a preset interval. For example, for a road cross-section at a sampling location, sampling may be performed on a sampling surface at a sampling interval of four meters to obtain a plurality of sampling points; and subsequently, a sampling point may be selected at each sampling location as a waypoint to form a waypoint sequence, thereby obtaining a plurality of waypoint sequences in the future route area based on the sampling point.

In this way, the efficiency of obtaining the waypoint sequence and reasonableness of the waypoint sequence can be improved, thereby further improving the effect of trajectory prediction.

In some examples of the present application, the at least one waypoint includes an intersection of a road cross-section at a corresponding sampling location and at least one lane centerline.

Therefore, traversing of the waypoint sequence is performed based on the lane centerline, so that the waypoint sequence used to guide trajectory prediction can be made more consistent with the actual traffic scenario, thereby further improving the effect of trajectory prediction.

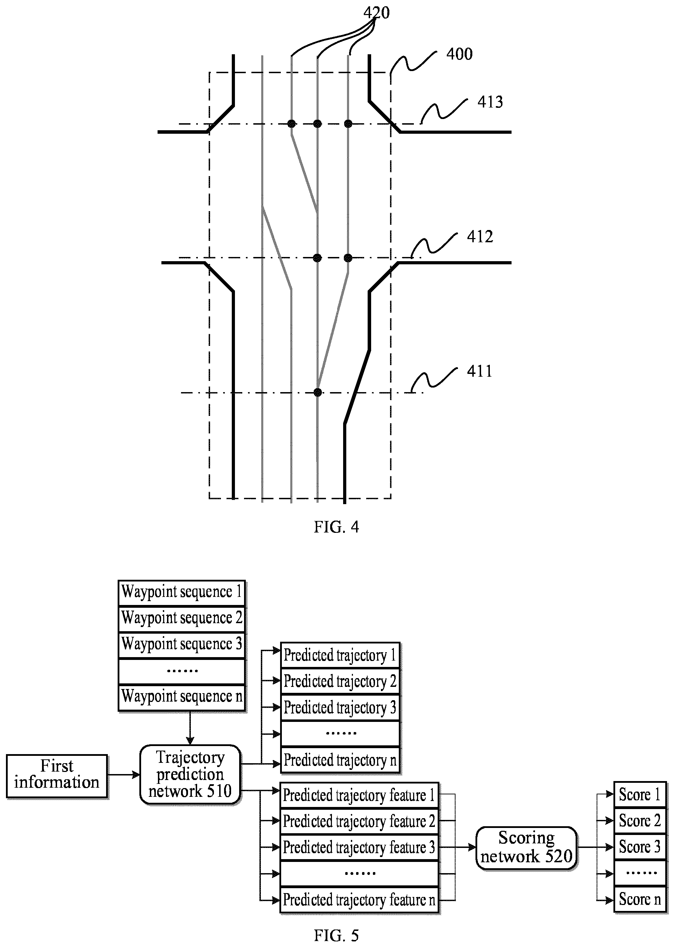

FIG. 4 is a schematic diagram showing waypoint sequences according to an example of the present disclosure.

In some example, as shown in FIG. 4, in a future route area 400, sampling surfaces 411, 412, and 413 are obtained through sampling at a preset distance interval. The sampling surfaces 411, 412, and 413 have one, two, and three intersections with lane centerlines 420, respectively. Based on each waypoint at each of a plurality of sampling surfaces, sequences of all possible waypoints that the target vehicle may pass through are traversed, resulting in 1 × 2 × 3 = 6 waypoint sequences.

In some examples of the present application, the plurality of waypoint sequences may include a plurality of waypoint sequences for each of a plurality of preset future time periods. For example, the plurality of preset future time periods may be set, and a possible future traveling segment of the target vehicle may be estimated for each preset future time period, and based on the above method, a plurality of possible waypoint sequences in each future traveling segment may be obtained. In this way, the waypoint sequences may further comprehensively cover a plurality of states of the target vehicle in the future, thereby making the trajectory prediction more precise.

In some examples of the present application, the trajectory prediction method is implemented based on a trajectory prediction model. The trajectory prediction model may include a trajectory prediction network and a scoring network, and performing, for each of the plurality of waypoint sequences, trajectory prediction based on the first information under the guidance of the waypoint sequence to obtain the predicted trajectory corresponding to the waypoint sequence and the score corresponding to the predicted trajectory may include: performing, for each of the plurality of waypoint sequences and using the trajectory prediction network, trajectory prediction based on the first information under the guidance of the waypoint sequence to obtain the predicted trajectory corresponding to the waypoint sequence and a predicted trajectory feature corresponding to the predicted trajectory; and inputting a plurality of predicted trajectory features corresponding to the plurality of waypoint sequences into the scoring network respectively to obtain respective scores that are output by the scoring network for the plurality of predicted trajectories corresponding to the plurality of waypoint sequences.

In this way, a score for a corresponding predicted trajectory is predicted based on a predicted trajectory feature, which can improve the efficiency and accuracy of score prediction.

FIG. 5 is a schematic structural diagram of a trajectory prediction model according to an example of the present disclosure.

In some examples of the present application, as shown in FIG. 5, a trajectory prediction network 510 in the trajectory prediction model may use a transformer network structure having an encoder and a decoder. It can be understood that the trajectory prediction network 510 may alternatively be another neural network model based on the transformer network structure, which is not limited here. A transformer architecture can calculate implicit representations of a model input and output through a self-attention mechanism. In other words, the transformer architecture may be an encoder-decoder model constructed based on this self-attention mechanism.

In some examples of the present application, for each waypoint sequence, the first information and the waypoint sequence may be directly input into the trajectory prediction network 510, and the trajectory prediction network 510 performs feature extraction and feature interaction on the first information and latent feature information in the waypoint sequence, so that the trajectory prediction network 510 performs prediction under the guidance of the waypoint sequence, to obtain the predicted trajectory feature corresponding to the waypoint sequence and the corresponding predicted trajectory.

In some examples of the present application, the predicted trajectory feature may be obtained based on an output of an encoder in a transformer network, and the predicted trajectory may be obtained by inputting the predicted trajectory feature into a decoder in the transformer network for decoding.

In some examples of the present application, a scoring network 520 in the trajectory prediction model may be any feed-forward neural network. For example, a multilayer perceptron (MLP) may be applied to construct the scoring network. The scoring network 520 is configured to analyze each predicted trajectory feature output by the trajectory prediction network to output a score corresponding to the predicted trajectory.

In some examples of the present application, the trajectory prediction network may include a first encoding network and a first prediction network, and performing, for each of the plurality of waypoint sequences and using the trajectory prediction network, trajectory prediction based on the first information under the guidance of the waypoint sequence to obtain the predicted trajectory corresponding to the waypoint sequence and the predicted trajectory feature corresponding to the predicted trajectory may include: inputting the first information into the first encoding network, so that the first encoding network performs feature extraction on the first information and outputs a first feature; and inputting, for each of the plurality of waypoint sequences, the waypoint sequence and the first feature into the first prediction network, so that the first prediction network performs trajectory prediction based on the first feature under the guidance of the waypoint sequence, and outputs the predicted trajectory corresponding to the waypoint sequence and the predicted trajectory feature corresponding to the predicted trajectory.

In this way, intrinsic feature extraction is performed on the first information in advance so that the first feature that can better reflect an intrinsic law and an intrinsic feature of the first information is obtained, and the first feature is directly input when trajectory prediction is performed for each waypoint sequence. Therefore, more critical feature information can be directly given to the first prediction network, thereby improving the effect of trajectory prediction.

In some examples of the present application, the first encoding network may perform, using an encoder structure in the transformer network, encoding calculations on the first information to extract the intrinsic feature of the first information and output the first feature.

In some examples of the present application, the first encoding network may be configured to first map the first information of multiple modalities (e.g., including an image, a video, point clouds, etc.) to a preset space (e.g., BEV space) to obtain an intermediate feature representation, and extract, using a spatial self-attention mechanism, a required spatial feature from an image feature, to aggregate spatial information. In addition, a temporal self-attention mechanism may be used to fuse historical information to aggregate temporal information.

In some examples of the present application, the first prediction network may use a transformer network structure having an encoder and a decoder. The first prediction network may be configured to perform feature extraction on the input waypoint sequence, perform further feature interaction and fusion on an extracted feature and the first feature, and then output the predicted trajectory feature corresponding to the waypoint sequence. Subsequently, the predicted trajectory feature may be decoded to obtain the corresponding predicted trajectory.

Therefore, rich intrinsic feature information (such as temporal and spatial information) is extracted from the first information in the above manner so that the accuracy of subsequent trajectory prediction is further improved. In addition, the first information is multi-modal in many cases and involves a large volume of data. Therefore, by performing intrinsic feature extraction on the first information first to convert an intrinsic feature into the first feature of a fixed dimension, the first feature can be directly input in each trajectory prediction, thereby reducing the overall amount of computation of the model, saving computing resources, and improving computational efficiency.

In some examples of the present application, the first prediction network may include a plurality of prediction subnetworks, and inputting, for each of the plurality of waypoint sequences, the waypoint sequence and the first feature into the first prediction network, so that the first prediction network performs trajectory prediction based on the first feature under the guidance of the waypoint sequence, and outputs the predicted trajectory corresponding to the waypoint sequence and the predicted trajectory feature corresponding to the predicted trajectory may include: for each of the plurality of waypoint sequences, performing the following operations: inputting, based on each prediction subnetwork among the plurality of prediction subnetworks, a first trajectory feature and a first trajectory point sequence that are corresponding to the prediction subnetwork and the first feature into the prediction subnetwork to obtain a second trajectory feature and a second predicted trajectory corresponding to the second trajectory feature output by the prediction subnetwork, wherein a first trajectory feature corresponding to the first prediction subnetwork among the plurality of prediction subnetworks is a preset initial trajectory feature, and wherein a first trajectory point sequence corresponding to the first prediction subnetwork is the waypoint sequence, wherein a first trajectory feature of each prediction subnetwork other than the first prediction subnetwork among the plurality of prediction subnetworks is a second trajectory feature output by a previous prediction subnetwork, and wherein a first trajectory point sequence of each prediction subnetwork other than the first prediction subnetwork among the plurality of prediction subnetworks is obtained by performing trajectory point sampling on a second predicted trajectory output by a previous prediction subnetwork; and determining a second trajectory feature and a second predicted trajectory output by the last prediction subnetwork among the plurality of prediction subnetworks as the predicted trajectory feature and the predicted trajectory corresponding to the waypoint sequence respectively.

In this way, based on the first feature and the waypoint sequences, the plurality layers of prediction subnetworks are applied to continuously perform iterative optimization on the trajectory feature and the predicted trajectory, so as to obtain a more accurate predicted trajectory.

In some examples of the present application, the first prediction network may include the plurality of prediction subnetworks, and each prediction subnetwork may be networks constructed based on the transformer network structure. It can be understood that the transformer network structure may be a transformer network structure based on a self-attention mechanism, a transformer network structure based on a multi-head attention mechanism, etc., which is not limited here.

In some examples of the present application, the first feature and the first trajectory feature and the first trajectory point sequence that are corresponding to the prediction subnetwork may be input into a corresponding prediction subnetwork together, so that the prediction subnetwork performs intrinsic feature extraction and interaction on the input feature and information under the guidance of the first trajectory point sequence, outputs the second trajectory feature and the corresponding second predicted trajectory, and then updates the first trajectory feature and the first trajectory point sequence based on the output second trajectory feature and the trajectory point sequence obtained through sampling based on the second predicted trajectory and inputs an updated first trajectory feature and an updated first trajectory point sequence into a next prediction subnetwork.

In some examples of the present application, each prediction subnetwork in the plurality of prediction subnetworks may include a feature interaction subnetwork and a decoding subnetwork, and inputting, based on each prediction subnetwork among the plurality of prediction subnetworks, the first trajectory feature and the first trajectory point sequence that are corresponding to the prediction subnetwork and the first feature into the prediction subnetwork to obtain the second trajectory feature and the second predicted trajectory corresponding to the second trajectory feature output by the prediction subnetwork may include: inputting, based on each prediction subnetwork among the plurality of prediction subnetworks, the first trajectory feature and the first trajectory point sequence that are corresponding to the prediction subnetwork and the first feature into a feature interaction subnetwork of the prediction subnetwork, to use the feature interaction subnetwork of the prediction subnetwork to perform interaction analysis on the first feature and the first trajectory feature under the guidance of the first trajectory point sequence, and output the second trajectory feature; and inputting the second trajectory feature output by the feature interaction subnetwork of the prediction subnetwork into a decoding subnetwork of the prediction subnetwork to obtain the second predicted trajectory.

In this way, a feature interaction subnetwork of each layer is first used to perform, under the guidance of a current first trajectory point sequence, feature interaction on a first trajectory feature and a first feature to obtain an optimized trajectory feature (i.e., a second trajectory feature), and then a decoding subnetwork of each layer is used to obtain a second predicted trajectory, which can further improve the effect of trajectory prediction.

In some examples of the present application, each prediction subnetwork may include a feature interaction subnetwork and a decoding subnetwork, where the feature interaction subnetwork may be a network constructed based on a transformer network structure, and the decoding subnetwork may use a decoder structure in the transformer network. It can be understood that the transformer network structure may be a transformer network structure based on a self-attention mechanism, a transformer network structure based on a multi-head attention mechanism, etc., which is not limited here.

In some examples of the present application, the preset initial trajectory feature may be a feature obtained through random initialization.

In some examples of the present application, the preset initial trajectory feature may alternatively be a feature obtained through continuous training and updating in a model training process.

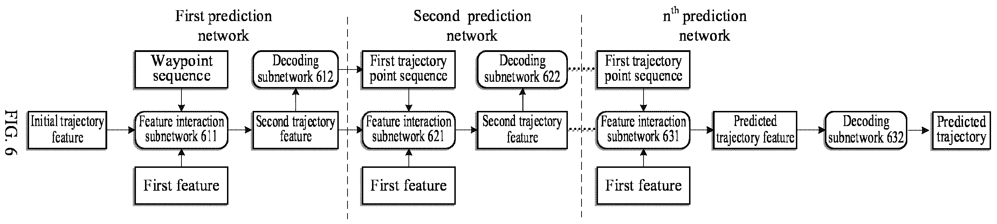

FIG. 6 is a schematic structural diagram of a first prediction network according to an example of the present disclosure.

In some examples of the present application, as shown in FIG. 6, the first prediction network may include n prediction subnetworks. An initial trajectory feature, a first feature, and an initial waypoint sequence may be input into a feature interaction subnetwork 611 of the first prediction subnetwork, so that the feature interaction subnetwork 611 extracts intrinsic features of various input information, performs feature interaction and fusion on the intrinsic features of the various input information under the guidance of the waypoint sequence, and outputs a second trajectory feature that is obtained through fusion of a feature of the waypoint sequence and a feature of first information. Subsequently, the second trajectory feature is input into a decoding subnetwork 612 of the first prediction subnetwork for decoding, so as to obtain a corresponding second predicted trajectory.

On this basis, trajectory point sampling may be performed on the second predicted trajectory output by the first prediction subnetwork to obtain a trajectory point sequence and use the trajectory point sequence as a first trajectory point sequence for input to the second prediction subnetwork. In addition, the second trajectory feature output by the first prediction subnetwork is used as a first trajectory feature for input to the second prediction subnetwork. The first trajectory point sequence, the first trajectory feature, and the first feature are input into a feature interaction subnetwork 621 of the second prediction subnetwork, so that the feature interaction subnetwork 621 extracts intrinsic features of various input information, performs feature interaction and fusion on the intrinsic features of the various input information under the guidance of the first trajectory point sequence, and outputs a second trajectory feature that is further optimized based on the first trajectory feature. Subsequently, the second trajectory feature is input into a decoding subnetwork 622 of the second prediction subnetwork for decoding, so as to obtain an iteratively optimized second predicted trajectory.

Subsequently, still using a method similar to the above, iterative optimization is performed on the second trajectory feature and the second predicted trajectory through layers of prediction subnetworks until a second trajectory feature output by a feature interaction subnetwork 631 of the n^{th} prediction subnetwork and a second predicted trajectory output by a decoding subnetwork 632 thereof are obtained, and the second trajectory feature and the second predicted trajectory are determined as the predicted trajectory feature and the predicted trajectory corresponding to the waypoint sequence, respectively.

It can be understood that the number of prediction subnetwork may be set as needed, which is not limited here.

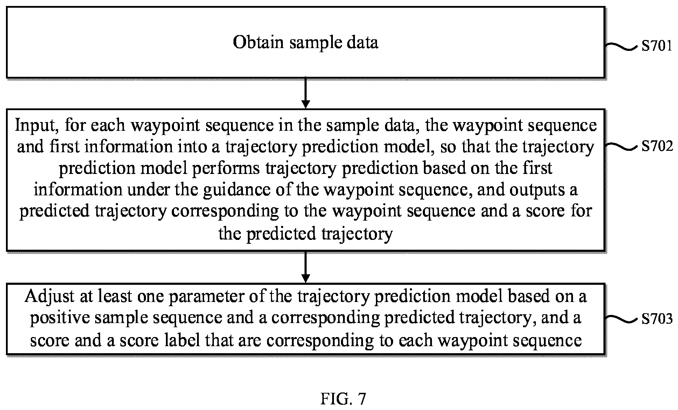

In some examples of the present application, as shown in FIG. 7, a method for training a trajectory prediction model is provided. The method includes the following steps: Step S701: Obtain sample data, where the sample data includes first information and a plurality of waypoint sequences of a sample vehicle, and the first information includes sample navigation information of the sample vehicle and sample perception information of surroundings of the sample vehicle, and each waypoint sequence includes a plurality of waypoints within a future route segment and is labeled with a corresponding score label, and the plurality of waypoint sequences include one positive sample sequence. Step S702: Input, for each waypoint sequence in the sample data, the waypoint sequence and the first information into the trajectory prediction model, so that the trajectory prediction model performs trajectory prediction based on the first information under the guidance of the waypoint sequence, and outputs a predicted trajectory corresponding to the waypoint sequence and a score for the predicted trajectory. Step S703: Adjust at least one parameter of the trajectory prediction model based on the positive sample sequence and a corresponding predicted trajectory, and a score and a score label that are corresponding to each waypoint sequence in the sample data.

Using the above method, a trajectory prediction model can be obtained through training. The model can obtain a plurality of possible waypoint sequences of a target vehicle on a future route segment, and perform prediction under the guidance of the waypoint sequences, to obtain a plurality of predicted trajectories corresponding to the plurality of waypoint sequences and scores for the predicted trajectories, and then determine a target predicted trajectory based on the scores for the predicted trajectories. In this way, it is possible to avoid a problem that jumps occur in the predicted trajectory in trajectory prediction for sub-segments, and to avoid a problem of insufficient lateral avoidance, deceleration, etc. occurring in an entire predicted trajectory, thereby improving reasonableness of trajectory prediction.

The trajectory prediction model may be constructed using the network structure described above. The sample navigation information and the sample perception information of the surroundings of the sample vehicle that are included in the first information of the sample vehicle are similar to the navigation information and perception information described above. The method of obtaining the plurality of waypoint sequences of the sample vehicle is similar to the operation method described above and will not be repeated here.

In some examples of the present application, the first information may further include at least one of map information or sample motion state information of the sample vehicle.

In some examples of the present application, adjusting the at least one parameter of the trajectory prediction model based on the positive sample sequence and the predicted trajectory corresponding to the positive sample sequence, and the score and the score label that are corresponding to each waypoint sequence in the sample data may include: calculating a first loss based on the positive sample sequence and the predicted trajectory corresponding to the positive sample sequence; calculating a second loss based on the score and the score label corresponding to each waypoint sequence in the sample data; and adjusting the at least one parameter of the trajectory prediction model based on the first loss and the second loss.

In some examples of the present application, adjusting the at least one parameter of the trajectory prediction model based on the positive sample sequence and the corresponding predicted trajectory and the score and the score label that are corresponding to each waypoint sequence may be: calculating a part of loss based on a difference between each positive sample sequence and a corresponding predicted trajectory, calculating the other part of loss based on a difference between a score and score label corresponding to one waypoint sequence and a score and score label corresponding to another waypoint sequence, and adjusting the parameter of the trajectory prediction model based on the two parts of losses.

In some examples of the present application, the plurality of waypoint sequences may alternatively be obtained based on the following operations: based on a sample motion state of the sample vehicle, determining the future route segment that the sample vehicle potentially passes through within a preset future time period; performing sampling on the future route segment at a preset distance interval to obtain a plurality of sampling locations on the future route segment; obtaining at least one waypoint on a road cross-section at each of the plurality of sampling locations; and based on each waypoint at each of the plurality of sampling locations, traversing a sequence of all possible waypoints that the sample vehicle potentially passes through, to obtain the plurality of waypoint sequences.

In some examples of the present application, the at least one waypoint includes an intersection of a road cross-section at a corresponding sampling location and at least one lane centerline.

In some examples of the present application, one of the plurality of waypoint sequences is labeled as the positive sample sequence to represent an optimal traveling trajectory of the sample vehicle under a condition corresponding to the sample data; and correspondingly, the remaining waypoint sequences other than the positive sample sequence are labeled as negative sample sequences. Each waypoint sequence is labeled with a score label. For example, a score of the positive sample sequence may be labeled as 1, and a score of the negative sample sequence may be labeled as 0.

In some examples of the present application, the trajectory prediction model includes a trajectory prediction network and a scoring network, and inputting, for each waypoint sequence in the sample data, the waypoint sequence and the first information into the trajectory prediction model, to use the trajectory prediction model to perform trajectory prediction based on the first information under the guidance of the waypoint sequence, and output a predicted trajectory corresponding to the waypoint sequence and a score for the predicted trajectory may include: performing, for each waypoint sequence in the sample data and using the trajectory prediction network, trajectory prediction based on the first information under the guidance of the waypoint sequence to obtain the predicted trajectory corresponding to the waypoint sequence and a predicted trajectory feature corresponding to the predicted trajectory; and inputting the predicted trajectory feature corresponding to each waypoint sequence in the sample data into the scoring network respectively, to obtain a score that is output by the scoring network for the predicted trajectory corresponding to the waypoint sequence.

Network structures used by the trajectory prediction network and the scoring network and operations performed by the trajectory prediction network and the scoring network are similar to those of the trajectory prediction network and the scoring network described above, and will not be repeated here.

In some examples of the present application, the trajectory prediction network may include a first encoding network and a first prediction network, and performing, for each waypoint sequence corresponding to the sample data and using the trajectory prediction network, trajectory prediction based on the first information of the sample data under the guidance of the waypoint sequence to obtain the predicted trajectory corresponding to the waypoint sequence and the predicted trajectory feature corresponding to the predicted trajectory may include: inputting the first information of the sample data into the first encoding network, so that the first encoding network performs intrinsic feature extraction on the first information of the sample data and outputs a first feature; and inputting, for each waypoint sequence in the sample data, the waypoint sequence and the first feature into the first prediction network, so that the first prediction network performs trajectory prediction based on the first feature under the guidance of the waypoint sequence, and outputs the predicted trajectory corresponding to the waypoint sequence and the predicted trajectory feature corresponding to the predicted trajectory.

Network structures used by the first encoding network and the first prediction network in the trajectory prediction network and operations performed by the first encoding network and the first prediction network are similar to those of the first encoding network and the first prediction network described above, and will not repeated here.

In some examples of the present application, the first prediction network may include a plurality of prediction subnetworks, and inputting, for each waypoint sequence in the sample data, the waypoint sequence and the first feature into the first prediction network, so that the first prediction network performs trajectory prediction based on the first feature under the guidance of the waypoint sequence, and outputs the predicted trajectory corresponding to the waypoint sequence and the predicted trajectory feature corresponding to the predicted trajectory may include: for each waypoint sequence in the sample data, performing the following operations: inputting, based on each prediction subnetwork among the plurality of prediction subnetworks, a first trajectory feature and a first trajectory point sequence that are corresponding to the prediction subnetwork and the first feature into the prediction subnetwork to obtain a second trajectory feature and a corresponding second predicted trajectory output by the prediction subnetwork, where a first trajectory feature corresponding to the first prediction subnetwork among the plurality of prediction subnetworks is a preset initial trajectory feature, and a first trajectory feature of each prediction subnetwork other than the first prediction subnetwork among the plurality of prediction subnetworks is a second trajectory feature output by a previous prediction subnetwork; and respectively determining a second trajectory feature and a second predicted trajectory output by the last prediction subnetwork among the plurality of prediction subnetworks as the predicted trajectory corresponding to the waypoint sequence and the predicted trajectory feature corresponding to the predicted trajectory.

A network structure used by the plurality of prediction subnetworks in the first prediction network and operations performed by the plurality of prediction subnetworks are similar to that of the plurality of prediction subnetworks in the first prediction network described above, and will not repeated here.

In some examples of the present application, similar to that described above for the plurality of prediction subnetworks, a first trajectory point sequence of the first prediction subnetwork may be a waypoint sequence, and a first trajectory point sequence of each subsequent prediction subnetwork may be obtained by performing trajectory point sampling on a predicted trajectory output by a previous prediction subnetwork.

In some examples of the present application, when the waypoint sequence is the positive sample sequence, a first trajectory point sequence of each prediction subnetwork among the plurality of prediction subnetworks is the waypoint sequence having noise added thereto, and gradually decreasing noise is added as a depth of prediction subnetwork increases; and when the waypoint sequence is a negative sample sequence, a first trajectory point sequence corresponding to the first prediction subnetwork is the waypoint sequence, and a first trajectory point sequence of each prediction subnetwork other than the first prediction subnetwork among the plurality of prediction subnetwork is obtained by performing trajectory point sampling on a second predicted trajectory output by a previous prediction subnetwork.

In this way, noise that decreases layer by layer is added to the positive sample sequence to simulate a process of iterative optimization performed by the plurality of prediction subnetworks on the predicted trajectory, so that the plurality of prediction subnetworks after training can continuously iteratively optimize the predicted trajectory to output a more accurate predicted trajectory.

In some examples of the present application, each prediction subnetwork in the plurality of prediction subnetworks may include a feature interaction subnetwork and a decoding subnetwork, and inputting, based on each prediction subnetwork among the plurality of prediction subnetworks, a first trajectory feature and a first trajectory point sequence that are corresponding to the prediction subnetwork and the first feature into the prediction subnetwork to obtain a second trajectory feature and a second predicted trajectory corresponding to the second trajectory feature output by the prediction subnetwork may include: inputting, based on each prediction subnetwork among the plurality of prediction subnetworks, the first trajectory feature and the first trajectory point sequence that are corresponding to the prediction subnetwork and the first feature into a feature interaction subnetwork of the prediction subnetwork, so that the feature interaction subnetwork of the prediction subnetwork performs interaction analysis on the first feature and the first trajectory feature under the guidance of the first trajectory point sequence, and outputs a second trajectory feature; and inputting the second trajectory feature output by the feature interaction subnetwork of the prediction subnetwork into a decoding subnetwork of the prediction subnetwork to obtain a second predicted trajectory output by the decoding subnetwork of the prediction subnetwork.

Network structures used by the feature interaction subnetwork and the decoding subnetwork and operations performed by the feature interaction subnetwork and the decoding subnetwork are similar to those of the feature interaction subnetwork and the decoding subnetwork described above, and will not repeated here.

In some examples of the present application, during a training phase, for a positive sample sequence corresponding to each piece of sample data, the positive sample sequence having gradually decreasing noise added thereto is used as the first trajectory point sequence of each prediction subnetwork, so that the process of iterative optimization on the predicted trajectory can be simulated during the training phase, which enables the model to learn to gradually optimize the predicted trajectory and thus to gain a capability to generate accurate predicted trajectories.

In some examples of the present application, the added noise may be random noise or Gaussian noise, which is not limited here.

In some examples of the present application, during the model training process, the intensity of the noise may be adjusted as the model training progresses to control a difficulty level of a trajectory prediction task, so that the model can generate a predicted trajectory as close as possible to the positive sample sequence at different difficulty levels.

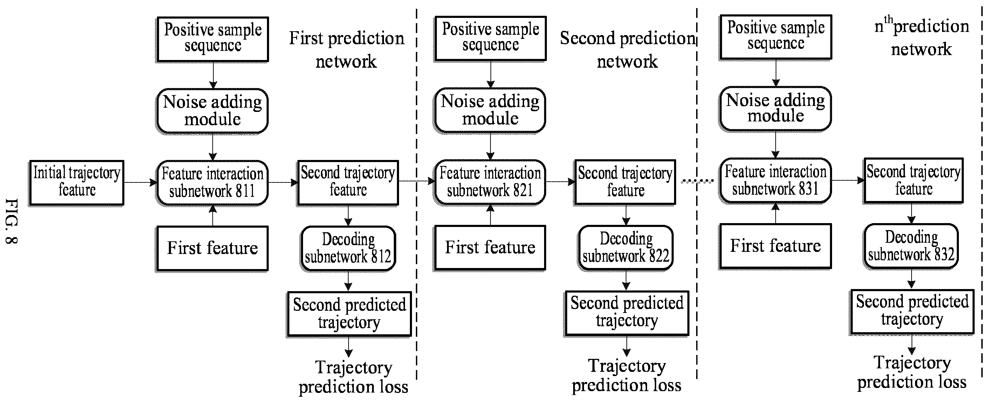

FIG. 8 is a schematic diagram of a method for training a first prediction network according to an example of the present disclosure.

In some examples of the present application, as shown in FIG. 8, the first prediction network may include n layers of prediction subnetworks. Before the positive sample sequence is input into the first prediction subnetwork, the positive sample sequence may be first input into a noise adding module of the first prediction subnetwork to obtain the positive sample sequence having noise added thereto. Subsequently, the initial trajectory feature, the first feature, and the positive sample sequence having noise added thereto are input into a feature interaction subnetwork 811 of the first prediction subnetwork, so that the feature interaction subnetwork 811 extracts intrinsic features of various input information, performs feature interaction and fusion on the intrinsic features of the various input information under the guidance of a waypoint sequence, and outputs a second trajectory feature that is obtained through fusion of a feature of the waypoint sequence and a feature of the first information. Subsequently, the second trajectory feature is input into a decoding subnetwork 812 of the first prediction subnetwork for decoding, so as to obtain a corresponding second predicted trajectory.

On this basis, the second trajectory feature output by the first prediction subnetwork is used as a first trajectory feature for input to the second prediction subnetwork. The positive sample sequence is input into a noise adding module of the second prediction subnetwork to obtain a positive sample sequence having noise added thereto. Subsequently, similar to the above, the first trajectory feature, the first feature, and the positive sample sequence having noise added thereto are input into a feature interaction subnetwork 821 of the first prediction subnetwork to obtain a second trajectory feature output by the feature interaction subnetwork 821, and the second trajectory feature is input into a decoding subnetwork 822 in the second prediction subnetwork for decoding, so as to obtain a second predicted trajectory corresponding to the second prediction subnetwork.

Subsequently, still using a method similar to the above, a second trajectory feature and a second predicted trajectory output by each prediction subnetwork are obtained until a second trajectory feature output by a feature interaction subnetwork 831 of the n^{th} prediction subnetwork and a second predicted trajectory output by a decoding subnetwork 832 thereof are obtained, and the second trajectory feature and the second predicted trajectory are determined as the predicted trajectory feature and the predicted trajectory corresponding to the waypoint sequence, respectively.

In some examples of the present application, calculating the first loss based on the positive sample sequence and the corresponding predicted trajectory includes: calculating the first loss based on the positive sample sequence in the sample data and a second predicted trajectory that is output by each prediction subnetwork among the plurality of prediction subnetworks and corresponds to the positive sample sequence.

In some examples of the present application, as shown in FIG. 8, the first loss may be calculated based on a difference between the positive sample sequence and a second predicted trajectory output by each prediction subnetwork. In some examples of the present application, losses of layers may be summed to obtain the first loss, and the entire first prediction network may be trained, thereby improving the training efficiency and training effect of the model.

In some examples of the present application, after a loss corresponding to each prediction subnetwork is obtained, the prediction subnetwork and its previous layers of prediction subnetworks may be trained based on the loss. This can further make a predicted trajectory output by each layer closer to a ground truth trajectory, thereby further improving the overall prediction accuracy of the model.

In some examples of the present application, the preset initial trajectory feature may be a randomly generated feature.

In some examples of the present application, the method for training a trajectory prediction model may further include: training the initial trajectory feature based on the positive sample sequence and the corresponding predicted trajectory, and the score and the score label that are corresponding to each waypoint sequence.

In this way, the initial trajectory feature is continuously iteratively updated while the model is being trained. In a model application phase, by applying the trained initial trajectory feature, the model can perform trajectory prediction on the basis of the initial trajectory feature that results in better performance, thereby further improving prediction effect of the trajectory prediction model.

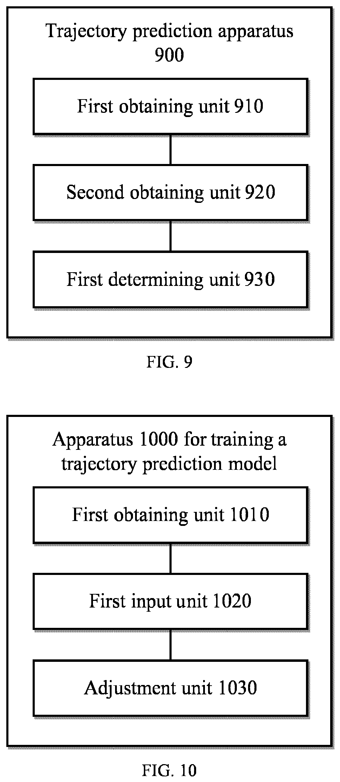

In some examples of the present application, as shown in FIG. 9, a trajectory prediction apparatus 900 is provided. The apparatus 900 includes: a first obtaining unit 910 configured to obtain first information of a target vehicle and a plurality of waypoint sequences, where the first information includes navigation information of the target vehicle and perception information of surroundings of the target vehicle, and each waypoint sequence includes a plurality of waypoints within a future route segment; a second obtaining unit 920 configured to perform, for each of the plurality of waypoint sequences, trajectory prediction based on the first information under the guidance of the waypoint sequence to obtain a predicted trajectory corresponding to the waypoint sequence and a score for the predicted trajectory; and a first determining unit 930 configured to determine, based on respective scores for a plurality of predicted trajectories, a target predicted trajectory among the plurality of predicted trajectories.

In some examples of the present application, as shown in FIG. 10, an apparatus 1000 for training a trajectory prediction model is provided. The apparatus 1000 includes: a first obtaining unit 1010 configured to obtain sample data, where the sample data includes first information of a sample vehicle and a plurality of waypoint sequences, and the first information includes sample navigation information of the sample vehicle and sample perception information of surroundings of the sample vehicle, and each waypoint sequence includes a plurality of waypoints within a future route segment and is labeled with a corresponding score label, and the plurality of waypoint sequences include one positive sample sequence; a first input unit 1020 configured to input, for each waypoint sequence in the sample data, the waypoint sequence and the first information into the trajectory prediction model, so that the trajectory prediction model performs trajectory prediction based on the first information under the guidance of the waypoint sequence, and outputs a predicted trajectory corresponding to the waypoint sequence and a score for the predicted trajectory; and an adjustment unit 1030 configured to adjust a parameter of the trajectory prediction model based on the positive sample sequence and a corresponding predicted trajectory, and a score and a score label that are corresponding to each waypoint sequence.

It should be understood that the units of the apparatus 900 shown in FIG. 9 may correspond to the steps in the trajectory prediction method implemented using a trajectory prediction model described with reference to FIG. 2. Therefore, the operations, features, and advantages described above for the trajectory prediction method implemented using a trajectory prediction model are also applicable to the apparatus 900 and the units included therein. In addition, the units of the apparatus 1000 shown in FIG. 10 may correspond to the steps in the method for training a trajectory prediction model described with reference to FIG. 7. Therefore, the operations, features, and advantages described above for the method for training a trajectory prediction model are also applicable to the apparatus 1000 and the units included therein. For the sake of brevity, some operations, features, and advantages are not described herein again.

According to an example of the present disclosure, an electronic device, a readable storage medium, and a computer program product are further provided.

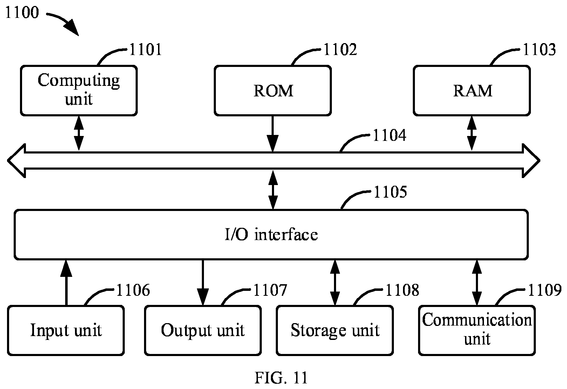

Referring to FIG. 11, a structural block diagram of an electronic device 1100 will be described below, which can serve as a server or a client of the present disclosure and is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown in the present specification, their connections and relationships, and their functions are merely examples, and are not intended to limit the implementation of the present disclosure described and/or required herein.

As shown in FIG. 11, the electronic device 1100 includes a computing unit 1101, the computing unit may perform various appropriate actions and processing according to a computer program stored in a read-only memory (ROM) 1102 or a computer program loaded from a storage unit 1108 to a random access memory (RAM) 1103. The RAM 1103 may further store various programs and data required for the operation of the electronic device 1100. The computing unit 1101, the ROM 1102, and the RAM 1103 are connected to each other through a bus 1104. An input/output (I/O) interface 1105 is also connected to the bus 1104.

A plurality of components in the electronic device 1100 are connected to the I/O interface 1105, including: an input unit 1106, an output unit 1107, the storage unit 1108, and a communication unit 1109. The input unit 1106 may be any type of device capable of inputting information to the electronic device 1100, the input unit 1106 may receive input digit or character information and generate a key signal input related to user settings and/or function control of the electronic device, and may include, but is not limited to, a mouse, a keyboard, a touchscreen, a trackpad, a trackball, a joystick, a microphone, and/or a remote controller. The output unit 1107 may be any type of device capable of presenting information, and may include, but is not limited to, a display, a speaker, a video/audio output terminal, a vibrator, and/or a printer. The storage unit 1108 may include, but is not limited to, a magnetic disk and an optical disk. The communication unit 1109 allows the electronic device 1100 to exchange information/data with other devices via a computer network such as the Internet and/or various telecommunication networks, and may include, but is not limited to, a modem, a network interface card, an infrared communication device, a wireless communication transceiver, and/or a chipset, for example, a Bluetooth device, an 802.11 device, a Wi-Fi device, a WiMax device, and/or a cellular communication device.

The computing unit 1101 may be various general-purpose and/or special-purpose processing components with processing and computing capabilities. Some examples of the computing unit 1101 include, but are not limited to, a central processing unit (CPU), a graphics processing unit (GPU), various dedicated artificial intelligence (AI) computing chips, various computing units on which machine learning model algorithms run, a digital signal processor (DSP), and any appropriate processor, controller, microcontroller, etc. The computing unit 1101 performs the various methods and processing described above, for example, the trajectory prediction method implemented using a trajectory prediction model or the method for training a trajectory prediction model. For example, in some examples of the present application, the trajectory prediction method implemented using a trajectory prediction model or the method for training a trajectory prediction model may be implemented as a computer software program tangibly contained in a machine-readable medium, such as the storage unit 1108. In some examples of the present application, a part or all of the computer program may be loaded and/or installed onto the electronic device 1100 via the ROM 1102 and/or the communication unit 1109. When the computer program is loaded onto the RAM 1103 and executed by the computing unit 1101, one or more steps of the trajectory prediction method implemented using a trajectory prediction model or the method for training a trajectory prediction model described above can be performed. Alternatively, in other examples, the computing unit 1101 may be configured, by any other appropriate means (for example, by means of firmware), to perform the trajectory prediction method implemented using a trajectory prediction model or the method for training a trajectory prediction model.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: implementation in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. The program code may be provided for a processor or a controller of a general-purpose computer, a special-purpose computer, or other programmable data processing apparatuses, such that when the program code is executed by the processor or the controller, the functions/operations specified in the flowcharts and/or block diagrams are implemented. The program code may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other categories of apparatuses can also be used to provide interaction with the user; for example, feedback provided to the user can be any form of sensory feedback (for example, visual feedback, auditory feedback, or tactile feedback); and an input from the user can be received in any form (including an acoustic input, a voice input, or a tactile input).

The systems and technologies described herein can be implemented in a computing system including a backend component (for example, as a data server), in a computing system including a middleware component (for example, an application server), in a computing system including a frontend component (for example, a user computer with a graphical user interface or a web browser through which the user can interact with the implementation of the systems and technologies described herein), or in a computing system including any combination of the backend component, the middleware component, and the frontend component. The components of the system can be connected to each other through digital data communication (for example, a communication network) in any form or medium. Examples of the communication network include: a local area network (LAN), a wide area network (WAN), and the Internet.

A computer system may include a client and a server. The client and the server are generally far away from each other and usually interact through a communication network. A relationship between the client and the server is generated by computer programs running on respective computers and having a client-server relationship with each other. The server may be a cloud server, a server in a distributed system, or a server combined with a blockchain.

It should be understood that steps may be reordered, added, or deleted based on the various forms of procedures shown above. For example, the steps recorded in the present disclosure may be performed in parallel, successively, or in a different order, provided that the desired result of the technical solutions disclosed in the present disclosure can be achieved, which is not limited herein.

Although the embodiments or examples of the present disclosure have been described with reference to the accompanying drawings, it should be appreciated that the method, system, and device described above are merely exemplary embodiments or examples, and the scope of the present disclosure is not limited by the embodiments or examples, but defined only by the granted claims and the equivalent scope thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

## Claims

1. A trajectory prediction method, comprising:
obtaining (S201) first information and a plurality of waypoint sequences of a target vehicle, wherein the first information comprises navigation information of the target vehicle and perception information of surroundings of the target vehicle, and wherein each waypoint sequence of the plurality of waypoint sequences comprises a plurality of waypoints within a future route segment;
performing (S202), for each waypoint sequence of the plurality of waypoint sequences, trajectory prediction based on the first information under the guidance of the waypoint sequence to obtain a predicted trajectory corresponding to the waypoint sequence and a score for the predicted trajectory; and
determining (S203), based on respective scores for a plurality of predicted trajectories corresponding to the plurality of waypoint sequences, a target predicted trajectory among the plurality of predicted trajectories.

2. The method according to claim 1, wherein the trajectory prediction method is implemented based on a trajectory prediction model, wherein the trajectory prediction model comprises a trajectory prediction network and a scoring network, and wherein the performing, for each waypoint sequence of the plurality of waypoint sequences, trajectory prediction based on the first information under the guidance of the waypoint sequence to obtain the predicted trajectory corresponding to the waypoint sequence and the score corresponding to the predicted trajectory comprises:
performing, for each waypoint sequence of the plurality of waypoint sequences and using the trajectory prediction network, trajectory prediction based on the first information under the guidance of the waypoint sequence to obtain the predicted trajectory corresponding to the waypoint sequence and a predicted trajectory feature corresponding to the predicted trajectory; and
inputting a plurality of predicted trajectory features corresponding to the plurality of waypoint sequences into the scoring network respectively, to obtain respective scores output by the scoring network for the plurality of predicted trajectories.

3. The method according to claim 2, wherein the trajectory prediction network comprises a first encoding network and a first prediction network, and wherein the performing, for each waypoint sequence of the plurality of waypoint sequences and using the trajectory prediction network, trajectory prediction based on the first information under the guidance of the waypoint sequence to obtain the predicted trajectory corresponding to the waypoint sequence and the predicted trajectory feature corresponding to the predicted trajectory comprises:
inputting the first information into the first encoding network, to use the first encoding network to perform intrinsic feature extraction on the first information and output a first feature; and
inputting, for each waypoint sequence of the plurality of waypoint sequences, the waypoint sequence and the first feature into the first prediction network, to use the first prediction network to perform trajectory prediction based on the first feature under the guidance of the waypoint sequence, and output the predicted trajectory corresponding to the waypoint sequence and the predicted trajectory feature corresponding to the predicted trajectory.

4. The method according to claim 3, wherein the first prediction network comprises a plurality of prediction subnetworks, and wherein the inputting, for each waypoint sequence of the plurality of waypoint sequences, the waypoint sequence and the first feature into the first prediction network, to use the first prediction network to perform trajectory prediction based on the first feature under the guidance of the waypoint sequence, and output the predicted trajectory corresponding to the waypoint sequence and the predicted trajectory feature corresponding to the predicted trajectory comprises:
for each waypoint sequence of the plurality of waypoint sequences, performing the following operations:
inputting, based on each prediction subnetwork among the plurality of prediction subnetworks, a first trajectory feature and a first trajectory point sequence that are corresponding to the prediction subnetwork and the first feature into the prediction subnetwork to obtain a second trajectory feature and a second predicted trajectory corresponding to the second trajectory feature output by the prediction subnetwork, wherein a first trajectory feature corresponding to a first prediction subnetwork among the plurality of prediction subnetworks is a preset initial trajectory feature, and wherein a first trajectory point sequence corresponding to the first prediction subnetwork is the waypoint sequence, wherein a first trajectory feature of each prediction subnetwork other than the first prediction subnetwork among the plurality of prediction subnetworks is a second trajectory feature output by a previous prediction subnetwork, and wherein a first trajectory point sequence of each prediction subnetwork other than the first prediction subnetwork among the plurality of prediction subnetworks is obtained by performing trajectory point sampling on a second predicted trajectory output by a previous prediction subnetwork; and
determining a second trajectory feature and a second predicted trajectory output by a last prediction subnetwork among the plurality of prediction subnetworks as the predicted trajectory feature and the predicted trajectory corresponding to the waypoint sequence respectively.

5. The method according to claim 4, wherein each prediction subnetwork in the plurality of prediction subnetworks comprises a feature interaction subnetwork and a decoding subnetwork, and wherein the inputting, based on each prediction subnetwork among the plurality of prediction subnetworks, the first trajectory feature and the first trajectory point sequence that are corresponding to the prediction subnetwork and the first feature into the prediction subnetwork to obtain the second trajectory feature and the second predicted trajectory corresponding to the second trajectory feature output by the prediction subnetwork comprises:
inputting, based on each prediction subnetwork among the plurality of prediction subnetworks, the first trajectory feature and the first trajectory point sequence that are corresponding to the prediction subnetwork and the first feature into a feature interaction subnetwork of the prediction subnetwork, to use the feature interaction subnetwork of the prediction subnetwork to perform interaction analysis on the first feature and the first trajectory feature under the guidance of the first trajectory point sequence, and output the second trajectory feature; and
inputting the second trajectory feature output by the feature interaction subnetwork of the prediction subnetwork into a decoding subnetwork of the prediction subnetwork to obtain the second predicted trajectory.

6. The method according to any one of claims 1 to 5, wherein the plurality of waypoint sequences are obtained based on the following operations:
predicting, based on a current motion state of the target vehicle, the future route segment that the target vehicle potentially passes through within a preset future time period;
performing sampling on the future route segment at a preset distance interval to obtain a plurality of sampling locations on the future route segment;
obtaining at least one waypoint on a road cross-section at each of the plurality of sampling locations; and
traversing, based on each waypoint at each of the plurality of sampling locations, all possible sequences of waypoints that the target vehicle potentially passes through, to obtain the plurality of waypoint sequences.

7. The method according to claim 6, wherein the at least one waypoint comprises at least one intersection of a road cross-section at a sampling location and at least one lane centerline.

8. The method according to any one of claims 1 to 7, wherein the first information further comprises at least one of map information and current motion state information of the target vehicle.

9. A method for training a trajectory prediction model, comprising:
obtaining (S701) sample data, wherein the sample data comprises first information and a plurality of waypoint sequences of a sample vehicle, and wherein the first information comprises sample navigation information of the sample vehicle and sample perception information of surroundings of the sample vehicle, wherein each waypoint sequence of the plurality of waypoint sequences comprises a plurality of waypoints within a future route segment and is labeled with a score label, and wherein the plurality of waypoint sequences comprise one positive sample sequence;
inputting (S702), for each waypoint sequence in the sample data, the waypoint sequence and the first information into the trajectory prediction model, to use the trajectory prediction model to perform trajectory prediction based on the first information under the guidance of the waypoint sequence, and output a predicted trajectory corresponding to the waypoint sequence and a score for the predicted trajectory; and
adjusting (S703) at least one parameter of the trajectory prediction model based on the positive sample sequence and a predicted trajectory corresponding to the positive sample sequence, and a score and a score label that are corresponding to each waypoint sequence in the sample data.

10. The method according to claim 9, wherein the adjusting the at least one parameter of the trajectory prediction model based on the positive sample sequence and the predicted trajectory corresponding to the positive sample sequence, and the score and the score label that are corresponding to each waypoint sequence in the sample data comprises:
calculating a first loss based on the positive sample sequence and the predicted trajectory corresponding to the positive sample sequence;
calculating a second loss based on the score and the score label corresponding to each waypoint sequence in the sample data; and
adjusting the at least one parameter of the trajectory prediction model based on the first loss and the second loss.

11. The method according to claim 9 or 10, wherein the plurality of waypoint sequences are obtained based on the following operations:
determining, based on a sample motion state of the sample vehicle, the future route segment that the sample vehicle potentially passes through within a preset future time period;
performing sampling on the future route segment at a preset distance interval to obtain a plurality of sampling locations on the future route segment;
obtaining at least one waypoint on a road cross-section at each of the plurality of sampling locations; and
traversing, based on each waypoint at each of the plurality of sampling locations, all possible sequences of waypoints that the sample vehicle potentially passes through, to obtain the plurality of waypoint sequences.

12. A trajectory prediction apparatus (900), comprising:
a first obtaining unit (910) configured to obtain first information and a plurality of waypoint sequences of a target vehicle, wherein the first information comprises navigation information of the target vehicle and perception information of surroundings of the target vehicle, and wherein each waypoint sequence of the plurality of waypoint sequences comprises a plurality of waypoints within a future route segment;
a second obtaining unit (920) configured to perform, for each waypoint sequence of the plurality of waypoint sequences, trajectory prediction based on the first information under the guidance of the waypoint sequence to obtain a predicted trajectory corresponding to the waypoint sequence and a score for the predicted trajectory; and
a first determining unit (930) configured to determine, based on respective scores for a plurality of predicted trajectories corresponding to the plurality of waypoint sequences, a target predicted trajectory among the plurality of predicted trajectories.

13. An apparatus (1000) for training a trajectory prediction model, the apparatus (1000) comprising:
a first obtaining unit (1010) configured to obtain sample data, wherein the sample data comprises first information and a plurality of waypoint sequences of a sample vehicle, and wherein the first information comprises sample navigation information of the sample vehicle and sample perception information of surroundings of the sample vehicle, wherein each waypoint sequence of the plurality of waypoint sequences comprises a plurality of waypoints within a future route segment and is labeled with a score label, and wherein the plurality of waypoint sequences comprise one positive sample sequence;
a first input unit (1020) configured to input, for each waypoint sequence in the sample data, the waypoint sequence and the first information into the trajectory prediction model, to use the trajectory prediction model to perform trajectory prediction based on the first information under the guidance of the waypoint sequence, and output a predicted trajectory corresponding to the waypoint sequence and a score for the predicted trajectory; and
an adjustment unit (1030) configured to adjust at least one parameter of the trajectory prediction model based on the positive sample sequence and a predicted trajectory corresponding to the positive sample sequence, and a score and a score label that are corresponding to each waypoint sequence in the sample data.

14. A non-transitory computer-readable storage medium storing computer instructions, wherein the computer instructions are used to cause a computer to perform the method according to any one of claims 1 to 11.

15. A computer program product, comprising a computer program, wherein the computer program, when executed by a processor, causes the method according to any one of claims 1 to 11 to be implemented.
